# FASCICULE DE BREVET EUROPEEN

(11) **EP 3 098 099 B1**
(45) Date de publication et mention de la délivrance du brevet: **29.08.2018**
(21) Numéro de dépôt: 16171118.9
(22) Date de dépôt: 24.05.2016
(51) Int. Cl.: B60G 15/06, F16C 33/76, F16C 33/78, F16C 19/10

(54) **BUTÉE DE SUSPENSION ET JAMBE DE SUSPENSION ASSOCIÉE**
RADAUFHÄNGUNGSLAGER UND ENTSPRECHENDES FEDERBEIN
BUMP STOP AND ASSOCIATED SUSPENSION STRUT

(30) Priorité: 29.05.2015 FR 1554840
(43) Date de publication de la demande: 30.11.2016
(73) Titulaire: NTN-SNR Roulements, 74010 Annecy (FR)
(72) Inventeur: DE GUIBERT, Matthieu, 74960 Cran Gevrier (FR); DELARCHE, Sébastien, 74320 Sévrier (FR)
(74) Mandataire: Alatis

(56) Documents cités:
- FR-A1- 2 759 752
- FR-A1- 2 899 154
- FR-A1- 2 918 138

## Description

### DOMAINE TECHNIQUE DE L'INVENTION

L'invention se rapporte à une butée de suspension pour une jambe de suspension, et plus particulièrement à une telle butée intégrant un palier lisse ou à roulement et un bloc filtrant interposé entre le palier et la caisse du véhicule.

### ÉTAT DE LA TECHNIQUE ANTÉRIEURE

Dans le document FR 2 839 471 est décrite une butée de suspension pour roue motrice de véhicule automobile, comprenant une coupelle supérieure susceptible d'être reliée à la caisse du véhicule, une coupelle inférieure comportant un appui de ressort, et un roulement disposé entre la coupelle supérieure et la coupelle inférieure, ledit roulement comportant un chemin de roulement supérieur associé à la coupelle supérieure et un chemin de roulement inférieur associé à la coupelle inférieure, au moins le chemin de roulement inférieur comprenant une extension axiale tubulaire. La coupelle inférieure est réalisée en matière plastique sans insert métallique et le chemin de roulement inférieur et son extension axiale tubulaire sont dimensionnés de manière à assurer la rigidité en flexion de l'ensemble constitué par la coupelle inférieure et le chemin de roulement inférieur. La coupelle supérieure intègre un capot et un bloc filtrant. Le capot se prolonge vers le bas par une jupe inférieure pour le centrage d'une butée de choc. La rigidification de la coupelle supérieure est obtenue par un insert métallique qui s'étend depuis une zone située au-dessus du roulement jusqu'à l'extrémité inférieure de la jupe, en formant un épaulement d'appui axial pour la butée de choc. Lorsque l'amortisseur télescopique atteint sa position de fin de course de compression et entre en contact avec la butée de choc, les efforts axiaux exercés sur la butée de choc sont transmis intégralement au couvercle par l'intermédiaire de l'épaulement. La butée de choc s'écrase et son expansion radiale se trouve limitée par la jupe renforcée par l'insert métallique. Le couvercle reprend ainsi tous les efforts axiaux et radiaux appliqués par la butée de choc qui, pour cette raison, doit avoir une grande rigidité. Par construction, le couvercle est lourd, du fait de la taille de l'armature métallique. Une variante du couvercle sans armature métallique est également proposée. Dans cette variante, la butée de choc intègre une coupelle métallique, insérée dans la jupe formée par le couvercle et en appui axial contre l'épaulement intérieur du couvercle. Cette coupelle métallique permet de limiter les efforts transmis radialement à la jupe du couvercle, mais la superposition de la coupelle et de la jupe introduit des surépaisseurs qui limitent, pour un encombrement radial donné, le volume disponible pour la butée de choc. De plus, le couvercle ne dispose d'aucun renfort pour reprendre les efforts transmis par la butée de choc dans le sens axial. Il s'ensuit des risques de casse du couvercle. Globalement, cette variante sans insert est peu performante et réservée à des véhicules très légers.

Dans le document FR2759752 est décrit une butée de suspension comportant: une rondelle supérieure métallique définissant un axe de révolution et une orientation axiale avec un haut et un bas, la rondelle supérieure présentant un chemin de guidage supérieur et une face supérieure opposée au chemin de guidage supérieur, une rondelle inférieure métallique disposée sous la rondelle supérieure et définissant un chemin de guidage inférieur situé en regard du chemin de guidage supérieur, des billes circulant sur le chemin de guidage supérieur et le chemin de guidage inférieur pour guider la rondelle inférieure en rotation par rapport à la rondelle supérieure autour de l'axe de révolution. La butée de suspension comporte en outre un couvercle comportant une portion d'appui s'étendant radialement et formant une face d'appui inférieur en appui contre la face supérieure de la rondelle supérieure, et une jupe de confinement d'une butée de choc, située radialement à l'intérieur de la rondelle supérieure et de la rondelle inférieure et s'étendant axialement depuis la portion d'appui vers le bas. La butée de suspension comporte en outre un insert d'armature annulaire surmoulé par une masse élastique et qui forme la portion d'appui et la jupe de confinement.

### EXPOSÉ DE L'INVENTION

L'invention vise à remédier aux inconvénients de l'état de la technique et à proposer un assemblage simplifié de butée de suspension qui combine une très bonne résistance aux chocs induits par la butée de choc, avec une légèreté de fabrication.

Pour ce faire est proposé, selon un premier aspect de l'invention, une Butée de suspension comportant: une rondelle supérieure métallique définissant un axe de révolution et une orientation axiale avec un haut et un bas, la rondelle supérieure présentant un chemin de guidage supérieur et une face supérieure opposée au chemin de guidage supérieur, une rondelle inférieure métallique disposée sous la rondelle supérieure et définissant un chemin de guidage inférieur situé en regard du chemin de guidage supérieur, un ou plusieurs corps de guidage circulant sur le chemin de guidage supérieur et le chemin de guidage inférieur pour guider la rondelle inférieure en rotation par rapport à la rondelle supérieure autour de l'axe de révolution, et un couvercle comportant une portion d'appui s'étendant radialement et formant une face d'appui inférieur en appui contre la face supérieure de la rondelle supérieure, une jupe de confinement d'une butée de choc, située radialement à l'intérieur de la rondelle supérieure et de la rondelle inférieure et s'étendant axialement depuis la portion d'appui vers le bas, la portion d'appui étant intégralement en matière plastique et la jupe de confinement comportant de la matière plastique surmoulant un insert d'armature annulaire, l'insert d'armature étant situé axialement intégralement sous la rondelle inférieure.

La structure ainsi définie présente un couvercle particulièrement léger, mais renforcé de manière ciblée dans la seule région susceptible de se fissurer lors des chocs. L'insert d'armature peut être métallique ou en matière synthétique chargée ou non, notamment en matériau composite en fibres de verre ou de carbone. L'une et/ou l'autre des rondelles peuvent avantageusement être constituées d'une tôle emboutie.

Les corps de guidage peuvent être des corps roulants, les chemins de guidage étant alors des chemins de roulement. Alternativement, le ou les corps de guidage peuvent être constitués par un ou plusieurs patins glissant sur les chemins de guidage, et formant avec ces derniers un palier lisse.

De préférence, le couvercle comporte une jupe extérieure de protection située radialement à l'extérieur de la rondelle supérieure et de la rondelle inférieure, et s'étendant depuis la portion d'appui axialement vers le bas. La jupe extérieure de protection entoure la rondelle supérieure et la rondelle inférieure. Les rondelles supérieure et inférieure sont ainsi confinées radialement entre la jupe extérieure de protection et la jupe de confinement.

Suivant un mode de réalisation, la butée comporte en outre un bloc filtrant comportant au moins une portion d'appui annulaire en appui sur portion d'appui du couvercle. Le bloc filtrant est destiné à venir s'interposer entre le couvercle et un élément de caisse de véhicule, et est pourvu à cet effet d'une interface de fixation comportant par exemple au moins trois trous de fixations. Le bloc filtrant peut être réalisé en aluminium, en tôle ou en matériau élastomère, avec ou sans insert d'armature de renfort annulaire.

Suivant un mode de réalisation particulièrement avantageux, le bloc filtrant comporte un manchon situé radialement à l'intérieur de la portion d'appui du bloc filtrant. Cette portion intérieure du bloc filtrant peut notamment servir d'appui pour une butée de choc et/ou pour une tige d'amortisseur télescopique. De préférence, le manchon du bloc filtrant s'étend axialement vers le bas et à l'intérieur de la jupe de confinement du couvercle et présente une extrémité inférieure située à l'intérieur de la jupe de confinement du couvercle, de préférence au-dessus de l'insert d'armature, et de préférence au-dessous du chemin de guidage inférieur. L'extrémité inférieure du manchon du bloc filtrant constitue une face d'appui pour une butée de choc. L'insert d'armature est alors idéalement positionné pour confiner l'expansion radiale de la butée de choc. De préférence, la butée de choc n'est pas axialement en contact avec le couvercle de manière à limiter les chocs axiaux sur le couvercle lors des impacts sur la butée de choc.

Suivant un mode de réalisation, la portion d'appui du bloc filtrant comporte une zone de contact avec la face supérieure de la rondelle supérieure, la zone de contact ayant un recouvrement radial avec le chemin de guidage de la rondelle supérieure, et de préférence un recouvrement radial avec le chemin de guidage de la rondelle inférieure. La zone de contact du bloc filtrant est de préférence plane et perpendiculaire à l'axe de révolution, ou comprise entre deux plans perpendiculaires à l'axe de révolution et situés à moins de 1 cm l'un de l'autre. La transmission des efforts suit alors un chemin essentiellement axial.

Suivant un mode de réalisation, le ou les corps de guidage sont en contact avec une zone intérieure du chemin de guidage de la rondelle supérieure et une zone extérieure du chemin de guidage de la rondelle inférieure, la zone intérieure étant radialement à l'intérieur de la zone extérieure, de préférence sans recouvrement radial avec la zone extérieure. Dans cette hypothèse, le palier constitué par les rondelles et le ou les corps de guidage est un palier à contact oblique.

Suivant un mode de réalisation, la butée comporte un support inférieur en appui sur une face inférieure de la rondelle inférieure opposée au chemin de guidage inférieur, le support inférieur comportant une paroi annulaire d'appui direct ou indirect pour une spire d'extrémité d'un ressort à boudin, la paroi annulaire d'appui du support inférieur étant orientée à l'opposé de la rondelle inférieure et ayant de préférence un recouvrement radial avec le chemin de guidage inférieur. De préférence, la jupe extérieure de protection du couvercle est en recouvrement axial avec le support inférieur. De préférence, la jupe extérieure de protection du couvercle et le support inférieur forment une chicane d'étanchéité annulaire située radialement à l'extérieur du chemin de guidage supérieur et du chemin de guidage inférieur. On peut également prévoir que la butée comporte un joint d'étanchéité interposé entre la jupe extérieure de protection du couvercle et le support inférieur. De préférence, le support inférieur comporte une jupe intérieure entourant la portion tubulaire du couvercle, située radialement à l'intérieur de la paroi annulaire d'appui. Cette jupe intérieure permet un guidage radial de la spire supérieure du ressort à boudin.

De préférence, la rondelle inférieure, la rondelle supérieure et le ou les corps de guidage sont logés dans une cavité annulaire délimitée par le couvercle et le support inférieur.

Suivant un autre aspect de l'invention, celle-ci a trait à une jambe de suspension comportant une butée de suspension telle que décrite précédemment, un ressort à boudin, une tige d'amortisseur et une butée de choc, une partie de la butée de choc étant située à l'intérieur de la jupe de confinement, de préférence en contact radial avec une paroi intérieure de la jupe de confinement.

Suivant un mode de réalisation la butée de suspension est une butée de suspension comporte en outre un bloc filtrant comportant au moins une portion d'appui annulaire en appui sur portion d'appui du couvercle et la butée de choc est en appui axial contre le bloc filtrant. Les efforts axiaux sur la butée de choc sont ainsi transmis directement au bloc filtrant, sans transiter par le palier ou le couvercle.

Suivant un mode de réalisation la butée de suspension est une butée de suspension selon au moins la revendication 3 et en ce que la tige d'amortisseur forme un épaulement situé à l'intérieur de la portion de confinement, en appui contre le bloc filtrant. De préférence, la butée de choc n'est pas en contact axial avec le couvercle. Les efforts axiaux de la tige d'amortisseur sont ainsi transmis directement au bloc filtrant, sans transiter par le palier ou le couvercle.

Suivant un autre aspect de l'invention, celle-ci a trait à un véhicule comportant une jambe de suspension telle que décrite précédemment et un élément de caisse de véhicule formant une cuvette en appui sur le bloc filtrant, de préférence en recouvrement radial avec la rondelle supérieure.

### BRÈVE DESCRIPTION DES FIGURES

D'autres caractéristiques et avantages de l'invention ressortiront à la lecture de la description qui suit, en référence aux figures annexées, qui illustrent:
- la figure 1, la partie supérieure d'une jambe de suspension suivant un mode de réalisation de l'invention;
- la figure 2, un détail d'une butée de suspension de la jambe de suspension de la figure 1.

Pour plus de clarté, les éléments identiques ou similaires sont repérés par des signes de référence identiques sur l'ensemble des figures.

### DESCRIPTION DÉTAILLÉE DE MODES DE RÉALISATION

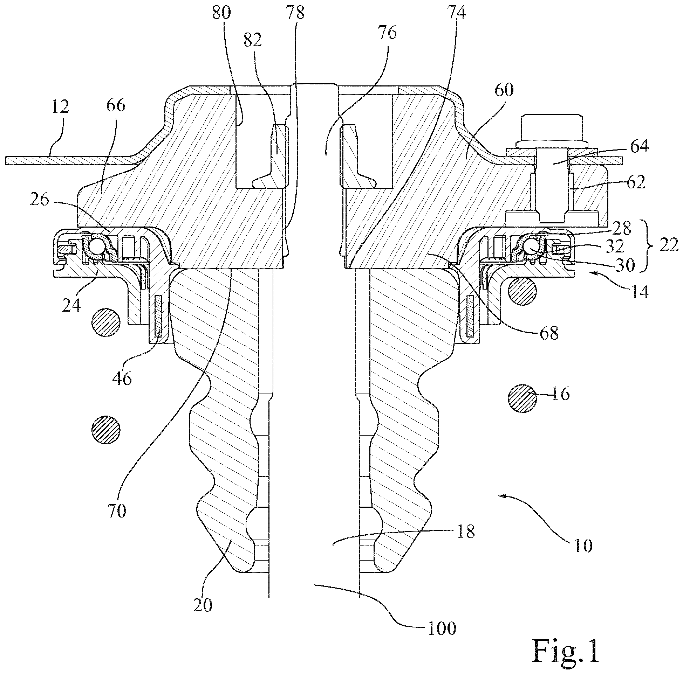

Sur la figure 1 est illustrée une jambe de suspension **10** montée sous un élément de caisse **12** de véhicule. La jambe de suspension **10** comporte une butée de suspension **14,** un ressort à boudin **16,** une tige d'amortisseur **18** d'un amortisseur télescopique et une butée de choc **20.**

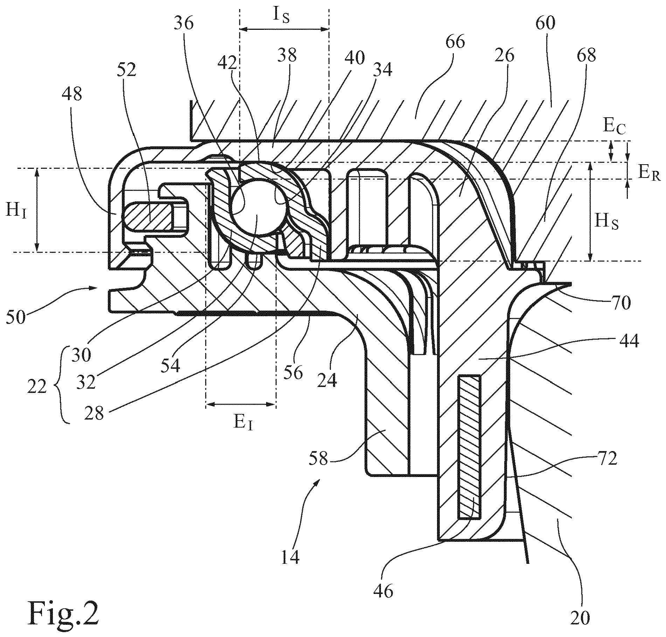

La butée de suspension **14,** illustrée en détail sur la figure 2, comporte une butée tournante **22** logée dans une cavité délimitée par un support inférieur **24** et un couvercle **26.** La butée tournante **22** comporte une rondelle supérieure **28** métallique définissant un axe de révolution **100,** une rondelle inférieure **30** métallique disposée sous la rondelle supérieure **28,** et des corps roulants **32,** en l'occurrence des billes, circulant sur un chemin de roulement supérieur **34** formé sur une face inférieure de la rondelle supérieure **28** et sur un chemin de roulement inférieur **36** formé sur une face supérieure de la rondelle inférieure **30** en regard du chemin de roulement **34** de la rondelle supérieure **28,** pour guider la rondelle inférieure **30** en rotation par rapport à la rondelle supérieure **28** autour de l'axe de révolution **100.**

Les termes "inférieur", "bas", "supérieur" et "haut" sont à prendre en référence à la position de montage de la butée de suspension sur le véhicule auquel elle est destinée. "Inférieur" ou "vers le bas" signifient donc du côté de l'appui de ressort, et "supérieur" ou "vers le haut" signifie du côté des moyens de montage à la caisse du véhicule. De même, "intérieur" signifie vers l'axe de révolution **100** la butée et "extérieur" signifie à l'opposé de cet axe.

La butée tournante **22** est à contact oblique, au sens où les corps roulants **32** sont en contact avec une zone intérieure du chemin de roulement **34** de la rondelle supérieure **28** et une zone extérieure du chemin de roulement **36** de la rondelle inférieure **30,** la zone intérieure étant radialement à l'intérieur de la zone extérieure, de préférence sans recouvrement radial avec la zone extérieure. On peut définir pour la rondelle supérieure **28** une hauteur **H_{S},** mesurée parallèlement à l'axe de révolution **100** et une épaisseur radiale **E_{S}** qui est la différence de distance, mesurée radialement, entre le point de la rondelle supérieure 28 le plus éloigné de l'axe de révolution 100 et le point de la rondelle supérieure 28 le moins éloigné de l'axe de révolution 100 et l'on constate que Hs et Es sont du même ordre de grandeur. De préférence, la hauteur H_{S} est inférieure à deux fois l'épaisseur **E_{S}.** De manière similaire, on peut définir pour la rondelle inférieure **30** une hauteur **H_{I}**, mesurée parallèlement à l'axe de révolution **100** et une épaisseur radiale **E_{I}** qui est la différence de distance, mesurée radialement, entre le point de la rondelle inférieure 30 le plus éloigné de l'axe de révolution **100** et le point de la rondelle inférieure **30** le moins éloigné de l'axe de révolution **100** et l'on constate que **H_{I}** et **E_{I}** sont du même ordre de grandeur. De préférence, la hauteur **H_{I}** est inférieure à deux fois l'épaisseur **E_{I}**.

Le couvercle **26** comporte une portion d'appui **38** s'étendant radialement et formant une face d'appui inférieur **40** en appui contre une face supérieure **42** de la rondelle supérieure **28,** opposée au chemin de roulement **34.** La portion d'appui **38** est réalisée sans insert d'armature et présente une faible épaisseur axiale **E_{C},** notamment dans la zone de contact avec la rondelle supérieure **28.** À titre indicatif, on peut comparer cette épaisseur **E_{C}** à la distance **E_{R}** entre les corps roulants **32** (ou le chemin de roulement **34)** et le couvercle, qui est une mesure de l'épaisseur utile de la rondelle supérieure **28.** De préférence, l'épaisseur axiale **E_{C}** est inférieure au double de la distance **E_{R}**.

Le couvercle **26** comporte en outre une jupe de confinement **44** de la butée de choc **20,** située radialement à l'intérieur de la rondelle supérieure **28** et de la rondelle inférieure **30** et s'étendant axialement depuis la portion d'appui **38** vers le bas.

Le couvercle **26** est une pièce moulée en matière plastique, comportant un insert d'armature **46** unique, surmoulé par la matière plastique, et situé dans la jupe de confinement **44,** axialement intégralement sous la rondelle supérieure **28** et sous la rondelle inférieure **30.**

Le couvercle **26** comporte une jupe extérieure de protection **48** située radialement à l'extérieur de la rondelle supérieure **28** et recouvrant une partie de la rondelle inférieure **30,** et s'étendant depuis la portion d'appui **38** axialement vers le bas, en recouvrement axial avec le support inférieur **24.** La jupe extérieure de protection **48** du couvercle **26** et le support inférieur **24** forment une chicane **50** d'étanchéité annulaire située radialement à l'extérieur du chemin de roulement **34** de la rondelle supérieure **28** et du chemin de roulement **36** de la rondelle inférieure **30.** Un joint d'étanchéité **52** élastique est interposé entre la jupe extérieure de protection **48** du couvercle **26** et le support inférieur **24.**

Le support inférieur **24,** réalisé de préférence intégralement en matière plastique et sans insert d'armature, est en appui sur une face inférieure **54** de la rondelle inférieure **30** opposée au chemin de roulement **36** de la rondelle inférieure **30,** et comporte une paroi annulaire d'appui **56** pour une spire d'extrémité du ressort à boudin **16,** la paroi annulaire d'appui **56** du support inférieur **24** étant orientée à l'opposé de la rondelle inférieure **30** et ayant de préférence un recouvrement radial avec le chemin de roulement **36** de la rondelle inférieure **30.** Le support inférieur **24** comporte en outre une jupe intérieure **58** entourant la jupe de confinement **44** du couvercle **26,** et située radialement à l'intérieur de la paroi annulaire d'appui **56,** pour servir de guidage radial aux spires supérieures du ressort à boudin **16.**

La butée de suspension **14** comporte en outre un bloc filtrant **60** en aluminium interposé entre le couvercle **26** et l'élément de caisse **12** du véhicule et pourvu de trous de fixations **62** pour des vis de fixation **64.** Le bloc filtrant **60** comporte une portion d'appui **66** annulaire en appui sur le couvercle **26** et un manchon **68** faisant saillie vers le bas par rapport à la portion d'appui **66** et situé radialement à l'intérieur de la portion d'appui **66** du bloc filtrant **60.** La portion d'appui **66** du bloc filtrant **60** comporte une zone de contact avec la portion d'appui **38** du couvercle **26,** qui est en recouvrement radial avec le chemin de roulement **34** de la rondelle supérieure **28,** et de préférence en recouvrement radial avec le chemin de roulement **36** de la rondelle inférieure **30.** La zone de contact du bloc filtrant **60** est plane, ou sensiblement plane. Le manchon **68** du bloc filtrant **60** s'étend axialement vers le bas et à l'intérieur de la jupe de confinement **44** du couvercle **26** et présente une extrémité inférieure **70** située à l'intérieur de la jupe de confinement **44** du couvercle **26,** au-dessus de l'insert d'armature **46,** et de préférence au-dessous du chemin de roulement **36** de la rondelle inférieure **30.** Une partie d'extrémité supérieure de la butée de choc **20** est située à l'intérieur de la jupe de confinement **44,** de préférence en contact radial avec une paroi intérieure **72** de la jupe de confinement **44** et en appui axial contre l'extrémité inférieure **70** du manchon **68** du bloc filtrant **60.** De manière remarquable, il n'existe pas de contact axial (dans un plan perpendiculaire à l'axe de révolution **100)** entre la butée de choc **20** et le couvercle **26.** En particulier, le couvercle **26** ne comporte pas d'épaulement permettant un appui axial de la butée de choc **20.** La paroi intérieure **72** est tournée radialement vers l'intérieure et est de préférence cylindrique.

Comme illustré sur la figure 1, la tige d'amortisseur **18** télescopique présente un épaulement **74** situé à l'intérieur de la jupe de confinement **44,** en appui contre le bloc filtrant **60,** et une extrémité filetée **76** traversant un trou **78** formé dans le bloc filtrant **60** et faisant saillie à l'intérieur d'une cuvette **80** du bloc filtrant **60.** Un écrou **82** inséré dans cette cuvette **80** et vissé sur l'extrémité filetée **76** de la tige d'amortisseur **18** assure la solidarisation entre la tige d'amortisseur **18** et le bloc filtrant **60.**

Lorsque l'amortisseur télescopique est sollicité brusquement dans le sens de sa contraction et que le cylindre d'amortisseur vient percuter la butée de choc **20,** celle-ci s'écrase en transmettant des efforts axiaux directement au bloc filtrant par contact au niveau de l'extrémité inférieure **70** du manchon **68,** et en transmettant des contraintes radiales à la jupe de confinement **44,** dont la déformation reste très faible grâce à l'insert d'armature métallique **46.**

Le mode de réalisation illustré sur la figure et discuté ci-dessus n'est donné qu'à titre illustratif et non limitatif. Diverses variations sont possibles. Les corps roulants **32** peuvent être des rouleaux. La butée tournante **22** peut être un palier lisse dont la rondelle inférieure **30** et la rondelle supérieure **28** forment des chemins de glissement, entre lesquels circulent un ou plusieurs patins, par exemple un patin annulaire, ou des patins en segments annulaires, comme décrit par exemple dans le document JP2014129888.

## Revendications

1. Butée de suspension (14) comportant:
- une rondelle supérieure (28) métallique définissant un axe de révolution (100) et une orientation axiale avec un haut et un bas, la rondelle supérieure (28) présentant un chemin de guidage supérieur (34) et une face supérieure (42) opposée au chemin de guidage supérieur (34),
- une rondelle inférieure (30) métallique disposée sous la rondelle supérieure (28) et définissant un chemin de guidage inférieur (36) situé en regard du chemin de guidage supérieur (34),
- un ou plusieurs corps de guidage (32) circulant sur le chemin de guidage supérieur (34) et le chemin de guidage inférieur (36) pour guider la rondelle inférieure (30) en rotation par rapport à la rondelle supérieure (28) autour de l'axe de révolution (100),
- un couvercle (26) comportant une portion d'appui (38) s'étendant radialement et formant une face d'appui inférieur (40) en appui contre la face supérieure (42) de la rondelle supérieure (28), le couvercle (26) comportant en outre une jupe de confinement (44) d'une butée de choc (20), située radialement à l'intérieur de la rondelle supérieure (28) et de la rondelle inférieure (30) et s'étendant axialement depuis la portion d'appui (38) vers le bas, la jupe de confinement (44) comportant un insert d'armature (46) annulaire;
**caractérisée en ce que** la portion d'appui (38) est intégralement en matière plastique et la jupe de confinement (44) comporte de la matière plastique surmoulant l'insert d'armature (46) annulaire, l'insert d'armature (46) annulaire étant situé axialement intégralement sous la rondelle inférieure (30).

2. Butée selon la revendication 1, **caractérisée en ce que** le couvercle (26) comporte une jupe extérieure de protection (48) située radialement à l'extérieur de la rondelle supérieure (28) et de la rondelle inférieure (30), et s'étendant depuis la portion d'appui (38) axialement vers le bas.

3. Butée selon l'une quelconque des revendications précédentes, **caractérisée en ce qu'**elle comporte en outre un bloc filtrant (60) comportant au moins une portion d'appui (66) annulaire en appui sur portion d'appui (38) du couvercle (26).

4. Butée selon la revendication 3, **caractérisée en ce que** le bloc filtrant (60) comporte un manchon (68) situé radialement à l'intérieur de la portion d'appui (66) du bloc filtrant (60).

5. Butée selon la revendication 4, **caractérisée en ce que** le manchon (68) du bloc filtrant (60) s'étend axialement vers le bas et à l'intérieur de la jupe de confinement (44) du couvercle (26) et présente une extrémité inférieure (70) située à l'intérieur de la jupe de confinement (44) du couvercle (26), de préférence au-dessus de l'insert d'armature (46), et de préférence au-dessous du chemin de guidage inférieur (36).

6. Butée selon l'une quelconque des revendications précédentes, **caractérisée en ce qu'**elle comporte un support inférieur (24) en appui sur une face inférieure (54) de la rondelle inférieure (30) opposée au chemin de guidage inférieur (36), le support inférieur (24) comportant une paroi annulaire d'appui direct ou indirect (56) pour une spire d'extrémité d'un ressort à boudin (16), la paroi annulaire d'appui (56) du support inférieur (24) étant orientée à l'opposé de la rondelle inférieure (30) et ayant de préférence un recouvrement radial avec le chemin de guidage inférieur (36).

7. Butée selon la revendication 6 et la revendication 2, **caractérisée en ce que** la jupe extérieure de protection (48) du couvercle (26) est en recouvrement axial avec le support inférieur (24).

8. Butée selon la revendication 7, **caractérisée en ce que** la jupe extérieure de protection (48) du couvercle (26) et le support inférieur (24) forment une chicane (50) d'étanchéité annulaire située radialement à l'extérieur du chemin de guidage supérieur (34) et du chemin de guidage inférieur (36).

9. Butée selon la revendication 7 ou la revendication 8, **caractérisée en ce qu'**elle comporte un joint d'étanchéité (52) interposé entre la jupe extérieure de protection (48) du couvercle (26) et le support inférieur (24).

10. Butée selon l'une quelconque des revendications 6 à 9, **caractérisée en ce que** le support inférieur (24) comporte une jupe intérieure (58) entourant la portion tubulaire du couvercle (26), située radialement à l'intérieur de la paroi annulaire d'appui (56).

11. Butée selon l'une quelconque des revendications 6 à 10, **caractérisée en ce que** la rondelle inférieure (30), la rondelle supérieure (28) et le ou les corps de guidage (32) sont logés dans une cavité annulaire délimitée par le couvercle (26) et le support inférieur (24).

12. Jambe de suspension (10) comportant une butée de suspension (14), un ressort à boudin (16), une tige d'amortisseur (18) et une butée de choc (20), **caractérisé en ce que** la butée de suspension (14) est une butée selon l'une quelconque des revendications précédentes, et **en ce qu'**une partie de la butée de choc (20) est située à l'intérieur de la jupe de confinement (44), de préférence en contact radial avec une paroi intérieure de la jupe de confinement (44).

13. Jambe de suspension (10) selon la revendication 12, **caractérisée en ce que** la butée de suspension (14) est une butée de suspension selon au moins la revendication 3 et **en ce que** la butée de choc (20) est en appui axial contre le bloc filtrant (60).

14. Jambe de suspension (10) selon l'une quelconque des revendications 12 à 13, **caractérisée en ce que** la butée de suspension (14) est une butée de suspension selon au moins la revendication 3 et **en ce que** la tige d'amortisseur (18) forme un épaulement (72) situé à l'intérieur de la portion de confinement, en appui contre le bloc filtrant (60).

15. Jambe de suspension selon l'une quelconque des revendications 12 à 14, **caractérisée en ce que** la butée de choc (20) n'est pas en contact axial avec le couvercle (26).

## Patentansprüche

1. Federanschlag (14) mit:
- einer oberen metallischen Scheibe (28), welche eine Rotationsachse (100) und eine axiale Ausrichtung mit einer Oberseite und einer Unterseite abgrenzt, wobei die obere Scheibe (28) einen oberen Führungsweg (34) und eine Oberseite (42) gegenüber dem oberen Führungsweg (34) aufweist,
- einer unteren metallischen Scheibe (30), die unter der oberen Scheibe (28) angeordnet ist und einen unteren Führungsweg (36) gegenüber dem oberen Führungsweg (34) abgrenzt,
- einem oder mehreren Führungskörpern (32), die sich auf dem oberen Führungsweg (34) und dem unteren Führungsweg (36) bewegen, um die untere Scheibe (30) in Bezug auf die obere Scheibe (28) drehbar um eine Rotationsachse (100) zu führen,
- einem Deckel (26) mit einem Anlageabschnitt (38), welcher sich radial erstreckt und eine untere Auflagefläche (40) bildet, die an der Oberseite (42) der oberen Scheibe (28) anliegt, wobei der Deckel (26) des Weiteren eine umschließende Schürze (44) zum Umschließen eines Stoßanschlags (20) enthält, die sich radial im Innern der oberen Scheibe (28) und der unteren Scheibe (30) befindet und sich axial vom Anlageabschnitt (38) aus nach unten erstreckt, wobei die umschließende Schürze (44) eine ringförmige Bewehrungseinlage (46) enthält, **dadurch gekennzeichnet, dass** der Anlageabschnitt (38) komplett aus Kunststoff besteht und die einschließende Schürze (44) Kunststoff enthält, der die ringförmige Bewehrungseinlage (46) überformt, wobei sich die gesamte ringförmige Bewehrungseinlage (46) axial unter der unteren Scheibe (30) befindet.

2. Anschlag nach Anspruch 1, **dadurch gekennzeichnet, dass** der Deckel (26) eine äußere Schutzmanschette (48) enthält, die sich radial am Außenbereich der oberen Scheibe (28) und der unteren Scheibe (30) befindet und sich vom Anlageabschnitt (38) axial nach unten erstreckt.

3. Anschlag nach einem der vorhergehenden Ansprüche, **dadurch gekennzeichnet, dass** er des Weiteren einen Filterblock (60) mit mindestens einem ringförmigen Anlageabschnitt (66) enthält, welcher am Anlageabschnitt (38) des Deckels (26) anliegt.

4. Anschlag nach Anspruch 3, **dadurch gekennzeichnet, dass** der Filterblock (60) eine Muffe (68) enthält, die sich radial im Innern des Anlageabschnitts (66) des Filterblocks (60) befindet.

5. Anschlag nach Anspruch 4, **dadurch gekennzeichnet, dass** sich die Muffe (68) des Filterblocks (60) axial nach unten ins Innere der einschließenden Schürze (44) des Deckels (26) erstreckt und ein unteres Ende (70) aufweist, dass sich im Innern der einschließenden Schürze (44) des Deckels (26), vorzugsweise aber über der Bewährungseinlage (46) und vorzugsweise unter dem unteren Führungsweg (36) befindet.

6. Anschlag nach einem der vorhergehenden Ansprüche, **dadurch gekennzeichnet, dass** er einen unteren Träger (24) enthält, der an einer unteren Seite (54) der unteren Scheibe (30) gegenüber dem unteren Führungsweg (36) anliegt, wobei der untere Träger (24) eine ringförmige Wand (56) zur direkten oder indirekten Auflage einer Endwindung der Spiralfeder (16) aufweist, wobei die ringförmige Auflagewand (56) des unteren Trägers (24) in die der unteren Scheibe (30) entgegengesetzte Richtung zeigt und den unteren Führungsweg (36) vorzugsweise radial überdeckt.

7. Anschlag nach Anspruch 6 und Anspruch 2, **dadurch gekennzeichnet, dass** die äußere Schutzmanschette (48) des Deckels (26) den unteren Träger (24) axial überdeckt.

8. Anschlag nach Anspruch 7, **dadurch gekennzeichnet, dass** die äußere Schutzmanschette (48) des Deckels (26) und der untere Träger (24) radial außen am oberen Führungsweg (34) und am unteren Führungsweg (36) eine ringförmige Abdichtungsschikane (50) bilden.

9. Anschlag nach Anspruch 7 oder Anspruch 8, **dadurch gekennzeichnet, dass** er eine Dichtung (52) enthält, die sich zwischen der äußeren Schutzmanschette (48) des Deckels (26) und dem unteren Träger (24) befindet.

10. Anschlag nach einem der Ansprüche 6 bis 9, **dadurch gekennzeichnet, dass** der untere Träger (24) eine Innenmanschette (58) enthält, welche den ringförmigen Abschnitt des Deckels (26) umschließt und sich radial im Innern der ringförmigen Auflagewand (56) befindet.

11. Anschlag nach einem der Ansprüche 6 bis 10, **dadurch gekennzeichnet, dass** die untere Scheibe (30), die obere Scheibe (28) und der oder die Führungskörper (32) in einem ringförmigen Hohlraum liegen, der durch den Deckel (26) und den unteren Träger (24) abgegrenzt wird.

12. Federbein (10), welches einen Federanschlag (14), eine Spiralfeder (16), eine Dämpferstange (18) und einen Stoßanschlag (20) enthält, **dadurch gekennzeichnet, dass** der Federanschlag (14) ein Anschlag nach einem der vorhergehenden Ansprüche ist, und dadurch, dass sich ein Teil des Stoßanschlags (20) im Innern der einschließenden Schürze (44), vorzugsweise im radialen Kontakt mit einer Innenwand der einschließenden Schürze (44) befindet.

13. Federbein (10) nach Anspruch 12, **dadurch gekennzeichnet, dass** der Federanschlag (14) ein Federanschlag mindestens nach Anspruch 3 ist und dadurch, dass der Stoßanschlag (20) axial am Filterblock (60) anliegt.

14. Federbein (10) nach einem der Ansprüche 12 bis 13, **dadurch gekennzeichnet, dass** der Federanschlag (14) ein Federanschlag nach mindestens Anspruch 3 ist, **dadurch gekennzeichnet, dass** die Dämpfungsstange (18) eine Schulter (72) bildet, die sich im Innern des Abschnitts, gegen den Filterblock (60) anliegend befindet.

15. Federbein nach einem der Ansprüche 12 bis 14, **dadurch gekennzeichnet, dass** der Stoßanschlag (20) nicht in axialem Kontakt zum Deckel (26) steht.

## Claims

1. A bump stop (14) comprising:
- a metal upper washer (28) defining an axis of revolution (100) and an axial orientation with a top and a bottom, with the upper washer (28) having a top guide track (34) and an upper face (42) opposite the top guide track (34),
- a metal lower washer (30) placed under the upper washer (28) and defining a lower guide track (36) located opposite the upper guide track (34),
- one or more guide body/bodies (32) travelling on the upper guide track (34) and the lower guide track (36) for guiding the lower washer (30) in rotation relative to the upper washer (28) about the axis of revolution (100),
- a cover (26) comprising a radially extending bearing portion (38) which forms a lower bearing surface (40), which bears against the upper face (42) of the upper washer (28), with the cover (26) further comprising a bump stop (20) containment skirt (44), radially located inside the upper washer (28) and the lower washer (30) and axially extending downwards from the bearing portion (38), with said containment skirt (44) comprising an annular armature insert (46);
**characterized in that** the bearing portion (38) is totally made of plastic material and the containment skirt (44) comprises plastic material overmolding the annular armature insert (46), with the annular armature insert (46) being totally axially located under the lower washer (30).

2. A stop according to claim 1, **characterized in that** the cover (26) has a protective outer skirt (48) radially located outside the upper washer (28) and the lower washer (30) and axially extending downwards from the bearing portion (38).

3. A stop according to any one of the preceding claims, **characterized in that** it further comprises a filter block (60) having at least one annular bearing portion (66) bearing on the bearing portion (38) of the cover (26).

4. A stop according to claim 3, **characterized in that** the filter block (60) comprises a sleeve (68) radially located inside the bearing portion (66) of the filter block (60) .

5. A stop according to claim 4, **characterized in that** the sleeve (68) of the filter block (60) axially extends downwards inside the containment skirt (44) of the cover (26) and has one lower end (70) located inside the containment skirt (44) of the cover (26), preferably above the armature insert (46), and preferably below the lower guide track (36).

6. A stop according to any one of the preceding claims, **characterized in that** it comprises a lower support (24) bearing on a lower face (54) of the lower washer (30) opposite the lower guide track (36), with the lower support (24) having an annular wall for the direct or indirect bearing (56) of an end turn of a coil spring (16), with the annular bearing wall (56) of the lower support (24) being so oriented as to face away from the lower washer (30) and preferably radially overlapping the lower guide track (36).

7. A stop according to claim 6 and claim 2, **characterized in that** the protective outer skirt (48) of the cover (26) axially overlaps the lower support (24).

8. A stop according to claim 7, **characterized in that** the protective outer skirt (48) of the cover (26) and the lower support (24) form an annular sealing baffle (50) radially located outside the upper guide track (34) and the lower guide track (36).

9. A stop according to claim 7 or claim 8, **characterized in that** it comprises a seal (52) inserted between the protective outer skirt (48) of the cover (26) and the lower support (24).

10. A stop according to any one of claims 6 to 9, **characterized in that** the lower support (24) comprises an inner skirt (58) surrounding the tubular portion of the cover (26) radially located inside the annular bearing wall (56) .

11. A stop according to any one of claims 6 to 10, **characterized in that** the lower washer (30), the upper washer (28) and the guide body/bodies (32) are received in an annular cavity defined by the cover (26) and the lower support (24).

12. A suspension strut (10) comprising a bump stop (14), a coil spring (16), a damper rod (18) and a jounce bumper (20), **characterized in that** the bump stop (14) is a stop according to any one of the preceding claims, and **in that** a portion of the jounce bumper (20) is located inside the containment skirt (44), preferably in radial contact with an inner wall of the containment skirt (44).

13. A suspension strut (10) according to claim 12, **characterized in that** the bump stop (14) is a bump stop according to at least claim 3 and **in that** the jounce bumper (20) axially bears against the filter block (60).

14. A suspension strut (10) according to any one of claims 12 to 13, **characterized in that** the bump stop (14) is a bump stop according to at least claim 3 and **in that** the damper rod (18) forms a shoulder (72) located inside the containment portion, and bears against the filter block (60) .

15. A suspension strut according to any one of claims 12 to 14, **characterized in that** the jounce bumper (20) is not in axial contact with the cover (26).
